# EUROPÄISCHE PATENTSCHRIFT

(11) **EP 0 276 785 B1**
(45) Veröffentlichungstag und Bekanntmachung des Hinweises auf die Patenterteilung: **06.07.1994**
(21) Anmeldenummer: 88100986.4
(22) Anmeldetag: 23.01.1988
(51) Int. Cl.: F16L 21/02

(54) **Herstellung von abdichtbaren, ineinandersteckbaren Betonrohren**
Manufacture of sealable and insertable concrete pipes
Fabrication de tubes en béton étanchables et insertables

(30) Priorität: 28.01.1987 DE 3702477
(43) Veröffentlichungstag der Anmeldung: 03.08.1988
(73) Patentinhaber: PT-Poly-Tec GmbH Vertrieb und Herstellung von Dichtungssystemen, 63456 Hanau (DE)
(72) Erfinder: Preisendörfer, Gerhard, W-6050 Heusenstamm (DE)
(74) Vertreter: Blumbach Weser Bergen Kramer

(56) Entgegenhaltungen:
- EP-A- 0 016 275
- AT-B- 200 867
- DE-A- 2 800 406
- DE-A- 2 935 392
- FR-A- 1 218 368
- US-A- 1 357 311
- US-A- 1 856 580
- US-A- 2 982 569
- US-A- 4 299 399

## Beschreibung

Die Erfindung bezieht sich auf ein Verfahren zur Herstellung von abdichtbaren Betonrohren, die jeweils ein Glockenmuffenende und ein Einsteck- oder Spitzende aufweisen, so daß benachbarte Betonrohre ineinander gesteckt werden können,um eine Steckmuffenverbindung zu bilden, ferner auf eine Vorrichtung zur Durchführung des Verfahrens, nämlich zur Herstellung der Dichtringaussparung an der Glockenmuffe eines Betonrohrs, sowie auf ein Betonrohr erhältlich durch das Verfahren nach Anspruch 1.

Um Steckmuffenverbindungen an Betonrohren abzudichten, wird in der Praxis zumeist noch der sogenannte Rollring verwendet, der auf das Einsteckende aufgezogen und mit diesem in die Muffe des benachbarten Rohres geschoben wird. Dabei rollt der Rollring ab und gelangt etwa zur Mitte der Steckmuffenverbindung. Wenn der Rollring infolge Unebenheiten nicht gleichmäßig abrollt, kommt es zu örtlichen Tordierungen und damit zu örtlichem Dünnerwerden des Rollrings, wodurch Undichtigkeiten entstehen. An den dünnen Stellen längt sich der Rollring und kann bis in den Spalt an der Stirnseite des Spitzendes der Muffenverbindung gelangen (sog. "Schnäbeln").

Bei Steckmuffenverbindungen mit Gleitdichtungen stützt sich die jeweilige Gleitdichtung an einer Schulter des Einsteckendes ab (EP-A-16 275, Fig. 2, oder Prospekt der Firma Forsheda, Schweden, Schachtdichtung 104), und ein Gleitmittel sorgt dafür, daß die Gleitdichtung in die Muffe geschoben werden kann. Bei gewissen Anwendungen macht sich der Umstand nachteilig bemerkbar, daß die Lippe der Gleitdichtung infolge des Drucks
des Rohrstrangs entlastet wird, so daß die Abdichtfunktion weniger gut ausgeübt wird.

Es ist ferner bekannt (US-A-2 982 569), eine Tasche am hinteren Ende der Muffe vorzusehen, in die die am Spitzende sitzende Dichtung beim Zusammenbau der Muffenverbindung hinein verformt wird. Zur Herstellung der Tasche wird ein Muffenformkern mit aufgesetztem flachem Gummiring verwendet, der in dem sich erhärtenden Beton steckenbleibt, wenn der Muffenformkern entfernt wird, und später entformt wird. Diese Konstruktion hat den bedeutenden Nachteil, daß bei verlegten Betonrohren das Spitzende infolge Biegung am langen Hebelarm Zugbelastungen aushalten muß, die vom Beton nicht gut vertragen werden.

Um diesen Nachteil zu vermeiden, ist es besser, die Gleitdichtung in der Muffe anzuordnen (DE-A-29 35 392), weil dann der Biegearm kürzer ausfällt. Im einzelnen wird die Gleitdichtung als Einsatzteil bei der Herstellung des Betonrohrs mit eingebunden. Dabei kann es vorkommen, daß beim Rütteln des Frischbetons sich Wasser aus dem Frischbeton abscheidet und zwischen Glockenmuffeninnenseite und Gleitdichtung sammelt, später verdunstet und einen taschenförmigen Spalt auf der Rückseite des Dichtrings freigibt. Wenn mit solchen Rohren ein Rohrstrang zur Aufnahme von Flüssigkeit verlegt wird, kann diese durch den taschenförmigen Spalt nach außen treten, die Dichtung also auf ihrer Rückseite umgehen. Nachteilig ist ferner, daß das Dichtungsmaterial bei langer Lagerung der Rohre bereits vor Einbau gealtert ist - besonders wirksames Dichtungsmaterial besteht aus Elastomer, welches jedoch durch Oxidantien, insbesondere Ozon, schädlich beeinflußt wird - und daß die vermeidbare Lagerung von Dichtringen eine unnötige Kapitalbindung darstellt. Ein weiterer Nachteil kommt bei Produktschwankungen zutage, wenn die Betonrohre mit vom Sollmaß konstant abweichenden Maßen hergestellt werden, denn dann ist die eingebaute Dichtung im Hinblick auf den abzudichtenden Spalt entweder über- oder unterdimensioniert.

Bei einer weiteren, in der Muffe angeordneten Gleitdichtung (AT-B-200 867, EP-A-0 016 275, Fig. 5) ist ein Dichtungsteil vorgesehen, das mit erweitertem Durchmesser in eine Aussparung oder Nut in der Innenseite der Muffe eingreift, wobei die radial gegenüberliegende Lippe zum Inneren des Rohrstranges gerichtet ist und bei größer werdendem Innendruck stärker angepreßt wird. Die Herstellung des Muffenrohres mit der Aussparung oder Nut wird nicht beschrieben; da jedoch Asbestzementrohre bzw. Tonrohre erwähnt sind, wird angenommen, daß die Nut in das noch bildsame Material eingedrückt worden ist. In gleicher Weise kann man bei Fristbeton nicht vorgehen, und Betonrohre sind in obigen Schriften nicht erwähnt.

Bei Betonrohren kommen gehäuft Abweichungen von den Sollmaßen vor - die jeweils hergestellte Serie (batch) ist entweder konstant zu dick oder zu dünn - so daß man mit einer einzigen Größe der Dichtung für jeweils ein Nennmaß der Betonrohre nicht auskommt.

Der Erfindung liegt die Aufgabe zugrunde, ein Herstellungsverfahren von Betonrohren zu schaffen, bei dem die Dichtung nach Wunsch des Herstellers unmittelbar mit Hartwerden des Betons oder relativ spät, gegebenenfalls kurz vor dem Zusammenstecken der Betonrohre, in die Muffe eingebaut werden kann, wobei für die jeweilige Serie (batch) die passende Größe der Dichtung verwendet werden kann. Die Betonrohre sollen ferner die Verwendung unterschiedlicher Dichtungen (Gleitdichtungen, Rolldichtungen) ermöglichen.

Die Lösung der gestellten Aufgabe ergibt sich aus der Merkmalskombination des Anspruchs 1. Ausgestaltungen und Weiterbildungen der Erfindung sind in den Unteransprüchen gekennzeichnet.

Die Betonrohre werden gewöhnlich mit den Glockenmuffenenden nach unten gegossen, wobei unter "Gießen" jeder Herstellungsvorgang zu verstehen ist, bei dem Betonmasse in eine Form gebracht wird, um diese auszufüllen. Die Form enthält gewöhnlich einen rohrförmigen Außenmantel und einen Kern, der selbst eine rohrförmige Innenwand und eine sogenannte Untermuffe enthält, die hier als Muffenformkern bezeichnet wird.

Um die Dichtung im Glockenmuffenende aufzunehmen und zu montieren, ist der Muffenformkern mit einem ersten Abschnitt zur Bildung des ringförmigen Glockenmuffenraums und mit einem zweiten Abschnitt zur Bildung der Dichtringaussparung gestaltet. Bei Erreichen der sogenannten Grünstandsfestigkeit des Betons wird der Muffenformkern aus dem Glockenmuffenende entfernt, so daß die Dichtringaussparung freigelegt wird. (Im Zustand der Gründstandsfestigkeit hält sich der Beton selbst, ist aber noch nicht tragfähig.) In der Zeit nach dem Erhärten des Betons und vor Verlegen der Betonrohre wird die jeweilige Dichtung in die Dichtringaussparung montiert. Da zu diesem Zeitpunkt feststeht, welche genauen Abmessungen die jeweils hergestellte Serie der Betonrohre hat, und zwar sowohl hinsichtlich des Glockenmuffenendes als auch des Spitzendes, kann die richtige Größe der Dichtung gewählt werden, um zu einer sicheren Abdichtung bei dem zu verlegenden Rohrstrang zu kommen.

Die durch den Muffenformkern hergestellte Dichtringaussparung eignet sich zur Aufnahme des Fußes oder Halteteils einer speziell gestalteten Gleitdichtung, es ist aber auch möglich, die bekannten Rollringe zu verwenden.

Der erste Abschnitt des Muffenformkerns entspricht der bisher üblichen Untermuffe und besteht vorzugsweise aus Stahl. Der zweite Abschnitt des Muffenformkerns ist so geformt, daß die Dichtringaussparung gebildet wird.

Wenn es sich bei dieser Dichtringaussparung um eine Randaussparung handelt, die stufenlos in das Stirnende der Glockenmuffe übergeht, dann können die beiden Abschnitte des Muffenformkerns dauernd miteinander verbunden bleiben, da der Muffenformkern in diesem Fall insgesamt in Axialrichtung des Rohres vom Glockenmuffenende gelöst werden kann.

Es ist aber auch möglich, die Abschnitte des Muffenformkerns so miteinander zu verbinden, daß sie voneinander gelöst werden können. In diesem Fall kann der erste Abschnitt des Muffenformkerns als Untermuffe bei der Herstellung konventioneller Glockenmuffenrohre dienen, die keine Dichtringaussparung aufweisen. Die Zweiteiligkeit des Werkzeugs kommt vor allem für die Produzenten in Betracht, welche beide Arten von Betonrohren herstellen wollen, jedoch kein großes Lager von Formwerkzeugen unterhalten wollen.

Die in dem Betonrohr herzustellende Aussparung kann sich axial bis zur Stirnseite der Muffe erstrecken, in welchem Fall man auch von einer zylinderförmigen Randaussparung sprechen kann, die über einen abgerundeten Einlaufbereich in die Stirnwand der Muffe übergeht. Um in dieser Randaussparung eine Dichtung sicher zu halten, ist eine ringförmige Hinterschneidungsfläche vorgesehen, so daß die Randaussparung gewissermaßen eine halbe schwalbenschwanzförmige Nut bildet.

Es ist aber auch möglich, die Aussparung im Querschnitt rechteckförmig zu gestalten, so daß der zweite Abschnitt des Muffenformkerns nur in radialer Richtung entformt werden kann. In diesem Fall wird der erste Abschnitt des Muffenformendes in axialer Richtung abgezogen und der zweite Abschnitt in radialer Richtung. Der zweite Abschnitt des Muffenformkerns besteht dann aus Gummi oder einem entsprechenden flexiblen und nachgiebigen Werkstoff, wobei sich der zweite Abschnitt gegebenenfalls aus mehreren Teilen zusammensetzt, die einzeln nach innen abgezogen werden können.

Nach Erhärten des Betonrohrs wird in die ringförmige Aussparung der Fuße oder Halteteil einer Dichtung eingelegt, eingeklebt oder mittels Spannring eingespannt, und der Abdichtteil ragt radial nach innen in den Glockenmuffenraum hinein, in welchem das Spitzende des benachbarten Betonrohres hineingeschoben wird, um an der Dichtung abgedichtet zu werden. Die Dichtung kann als Preß- und/oder Lippendichtung ausgestaltet sein.

Ausführungsbeispiele der Erfindung werden anhand der Zeichnungen beschrieben. Dabei zeigt:
- Fig. 1: einen Querschnitt durch eine Steckmuffenverbindung,
- Fig. 2: das Glockenmuffenende eines Betonrohres im Querschnitt (vergrößerter Ausschnitt),
- Fig. 3: einen axialen Längsschnitt durch die Dichtung (nochmals vergrößert),
- Fig. 4: eine Dichtung mit Abdeckband, in einem Glockenmuffenende montiert,
- Fig. 5: einen Glockenmuffenformkern (verkleinert),
- Fig. 6 bis 8: den Vorgang des Ineinandersteckens von Spitzende und Glockenmuffenende eines mit einer Gleitdichtung versehenen Betonrohrs,
- Fig. 9 bis 11: die entsprechenden Phasen bei der Verwendung eines Rollrings,
- Fig. 12: einen Querschnitt durch eine Einzelheit einer Form zum Gießen eines Betonrohrs, im Bereich des Glockenmuffenendes,
- Fig. 13: eine abgewandelte Einzelheit daraus,
- Fig. 14: einen Querschnitt durch eine im Glockenmuffenende montierte Dichtung und
- Fig. 15: einen Querschnitt durch eine Dichtung bei zusammengesteckten Betonrohren.

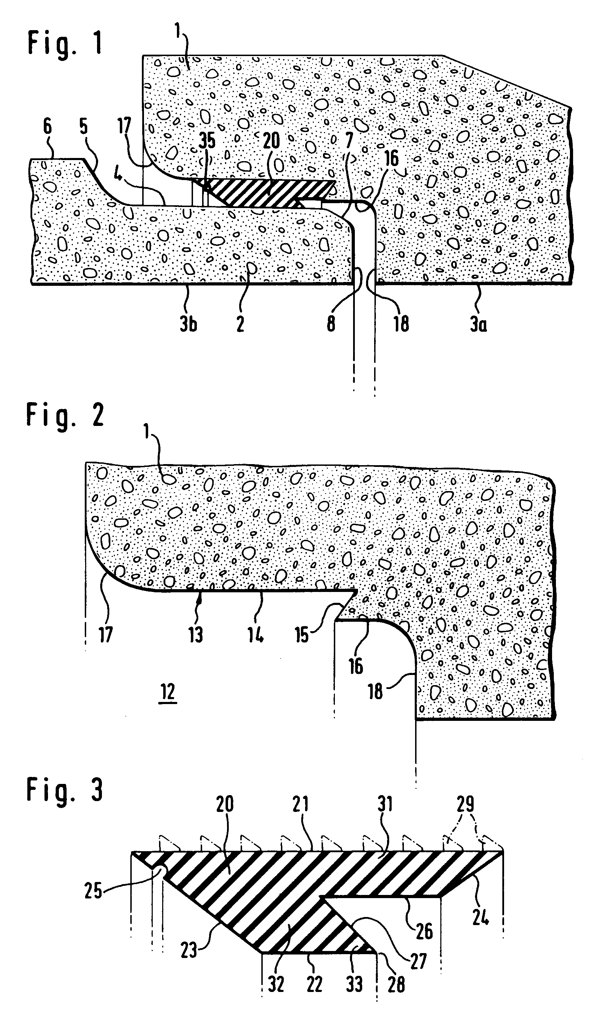

Fig. 1 stellt die neuartige Abdichtung an Steckmuffenverbindungen von Betonrohren dar. Jedes Betonrohr weist eine Glockenmuffe 1 und ein Einsteckende oder Spitzende 2 auf. Die innere Rohroberfläche ist mit 3a und 3b bezeichnet. Aus Darstellungsgründen sind Umlaufkanten nur angedeutet worden. Das Einsteckende 2 weist eine Außenoberfläche 4 auf, die über eine Schulter 5 in die Nennaußenoberfläche 6 des Betonrohrs übergeht. Am äußersten Ende ist eine Einlaufabrundung oder -schräge 7 und eine radiale Stirnfläche 8 vorgesehen. Die Außenfläche 4 ist zylindrisch, kann aber auch mit einer geringen Konizität von beispielsweise 1 bis 2° versehen sein.

Die Glockenmuffe 1 weist einen ringförmigen Glockenmuffenraum 12 (Fig. 2) zur Aufnahme des Einsteckendes 2 auf. Der Glockenmuffenraum ist in radialer Richtung durch eine Randaussparung 13 erweitert. Die Randaussparung 13 weist einen zylindrischen Bereich 14, eine als ringförmige Hinterschneidungsfläche ausgebildete Schulter 15 und eine Einlaufabrundung oder -schräge 17 auf. Der Glockenmuffenraum 12 wird durch eine an der Schulter 15 angrenzende Innenoberfläche 16 und eine radiale Schulter 18 begrenzt, wobei ein hohlkehlenförmiger Ausweichbereich für die Stirnfläche 8 des Einsteckendes gebildet wird.

Fig. 3 zeigt den Querschnitt durch eine Dichtung 20 in einer axialen Schnittebene. Der Querschnitt ist grob gesehen trapezförmig und weist eine radial außenliegende Breitseite 21, eine radial innenliegende Schmalseite 22, eine axial außenliegende Schrägseite 23 sowie eine innenliegende Schrägseite 24 auf. In der Schrägseite 23, nahe ihres radial äußeren Endes, ist eine Nut 25 zur Aufnahme eines Spannrings 35 vorgesehen. Die Schrägseite 24 wird durch eine im Querschnitt dreieckförmige Aussparung mit Begrenzungsflächen 26 und 27 unterbrochen. Die Begrenzungsseite 26 ist etwa fluchtend zur Innenoberfläche 16 ausgerichtet, während für die Begrenzungssfläche 27 eine Neigung gewählt ist, wie dies für die Ausbildung einer Kante 28 einer Lippendichtung vorteilhaft ist. Die Seite 21 kann mit verzahnungsartigen Widerhaken 29 versehen sein, um nach Einbau der Dichtung 20 in der Randaussparung 13 besser halten zu können, während mit dem Spitzende beim Zusammenbau eines Rohrstranges manipuliert wird. Zur Erzielung dieses sicheren Haltes kann ferner ein geringes Übermaß der Dichtung 20 gegenüber der Randaussparung 13 eingehalten werden. Im gleichen Sinne wirkt der in der Nut 25 eingelegte Spannring 35, der als metallischer Federring oder als Kunststoffspange ausgebildet sein kann. Es ist auch möglich, die (glatt ausgebildete) Seite 21 mit der Fläche 14 zu verkleben, um einen sicheren Halt der Dichtung 20 in der Muffe 1 zu gewährleisten.

Der im Querschnitt trapezförmige Bereich zwischen den Flächen 21, 23, 24, 26 ist der Halteteil 31 der Dichtung 20, während der parallelogrammartige Bereich zwischen den Flächen 22, 23, 27 der Abdichtteil 32 mit Preß- und Lippendichtfunktion darstellt.

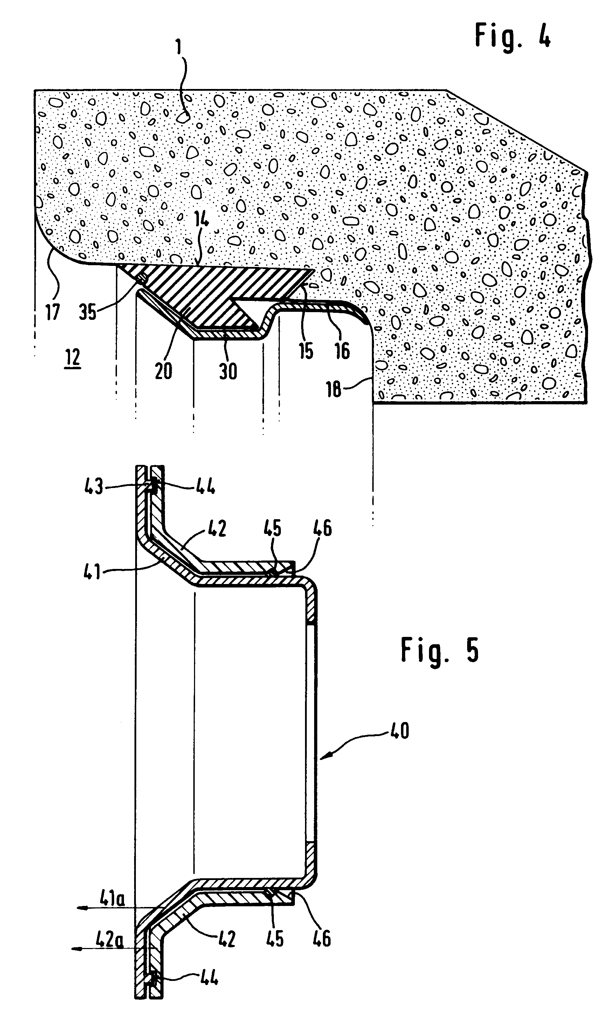

Fig. 4 zeigt eine Abdeckung 30 zum Schutz der Dichtung 20. Die Abdeckung 30 besteht aus einem extrudierten Kunststoffprofil, welches an den Flächen 16 und 18 der Muffe und den Seiten 22 und 23 der Dichtung anliegt. Das Profilband 30 ist zu einem Ring gebogen, wobei sich die Enden ein wenig überlappen können. Das Profilband 30 wird vor der Montage der Rohre entfernt.

Fig. 5 zeigt einen Muffenformkern 40 zur Herstellung der Innenkontur der Muffe 1 und besteht aus einem ersten Abschnitt 41, der sogenannten Untermuffe für Rollringverbindungen, und einem zweiten Abschnitt 42 als Formring zur Herstellung der Randaussparung 13. Die Abschnitte oder Teile 41 und 42 sind lösbar miteinander verbunden, d. h. nach Entfernen des Teils 42 kann das Teil 41 bei der Herstellung von konventionell gestalteten Muffen für Rolldichtringe verwendet werden. Der Zusammenhalt der Teile 41 und 42 erfolgt über einen am Teil 41 angebrachten Ring 43 und einer am Teil 42 angebrachten Nut 44, die als Rastverbindung wirken. Eine Spaltdichtung 45 sorgt dafür, daß die Fuge zwischen den Teilen 41 und 42 nicht von Betonschlämpe verklebt wird. Wie ersichtlich, weist das Teil 42 eine umlaufende Schrägfläche 46 auf, mit der die Schrägfläche 15 der Muffe 1 erzeugt wird. Der Winkel der Schrägfläche 46 ist nicht kritisch, er sollte jedoch kleiner als 90° sein, um der Dichtung 20 ausreichenden Halt auf der Nutgrundfläche 14 zu geben. Ein Winkelbereich von 60 bis 45° wird bevorzugt. Die Schräge der Fläche 15 führt zur Zentrierung der Dichtung 20, wenn diese beim Einschieben des Einsteckendes 2 in axialer Richtung beaufschlagt wird.

Der Abdichtbereich 32 der Dichtung 20 gegenüber dem Einsteckende 2 enthält die Druckfläche 22 und die Kante 28 einer Lippe 33, so daß sowohl eine Kompressionsdichtfunktion als auch Lippendichtfunktion ausgeübt wird. Bei dem in Fig. 3 gezeigten Querschnitt weist der Abdichtbereich 32 also sowohl Merkmale einer Lippendichtung als auch einer Kompressionsringdichtung auf. Es versteht sich, daß man den Abdichtbereich auch gänzlich im Sinne einzelner ringförmiger Lippendichtungen gestalten kann.

Das Material der Dichtung besteht aus einem Elastomer gummiartiger Konsistenz. Das Material ist etwas zusammenpreßbar, um im leicht gestauchten Zustand in die Randaussparung 13 eingebracht werden zu können, wobei es dann aber in Lunkerstellen oder dergleichen sich ausdehnen kann, um eine wirksame Abdichtung zu bilden. Dies trifft im übrigen auch auf die hakenartigen Lippen 29 (Fig. 3) zu.

Wenn sich im fertig montierten Rohrstrang ein Druck aufbaut, wird die Lippe 33 an der Fläche 27 druckbelastet und so stärker an die Fläche 4 des Einsteckendes 2 angepreßt. Eine optimale Wirkung tritt bei einer Winkelausrichtung der Fläche 27 im Bereich 45° +/- 10° ein.

Hergestellt Betonrohre haben mitunter eine Trendabweichung, d.h. alle Abmaße sind ein wenig zu groß oder zu klein. Für einen solchen Fall ist ein Passungssatz von Dichtungen 20 vorgesehen, der neben dem Sollmaß auch Exemplare mit Übermaß oder Untermaß enthält. Es können deshalb angepaßte große Dichtungen 20 gewählt und eingebaut werden. Die zylindrische Fläche 14 erleichtert die Feststellung der jeweils richtigen Größe der einzubauenden Dichtung 20. In der Praxis wird der Betonrohrhersteller die jeweils passende Dichtungsgröße in entsprechender Anzahl bei dem Dichtungsringhersteller bestellen.

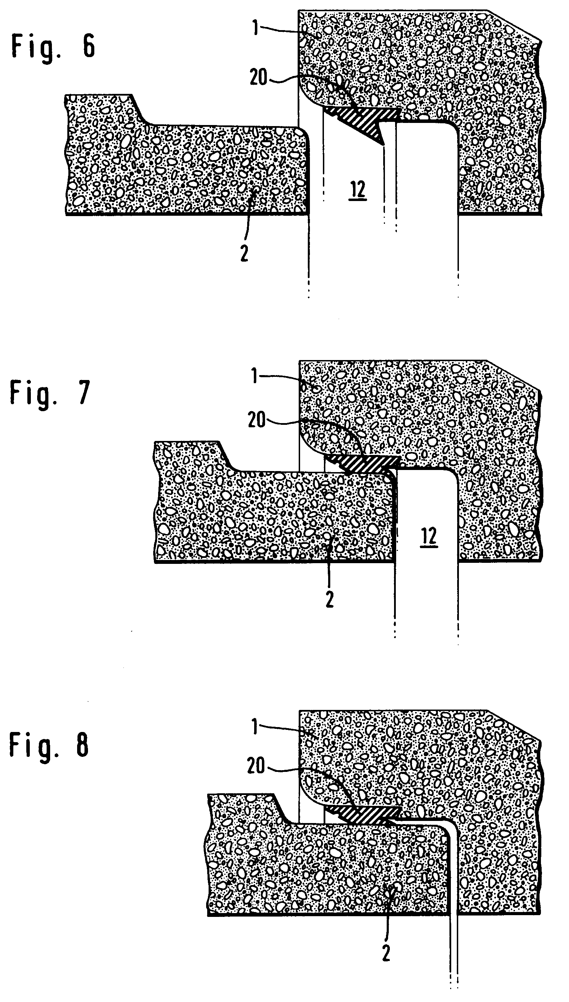

Fig. 6 bis 8 zeigen die einzelnen Phasen beim Zusammenbau eines Betonrohrstranges. In dem gezeigten Ausführungsbeispiel ist die Dichtung 20 mehr als Lippendichtung gestaltet, jedoch wird diese beim Zusammenbau zunehmend zusammengepreßt, wie Fig. 7 und 8 zeigen, so daß auch die Kompressionsfunktion voll zum Tragen kommt.

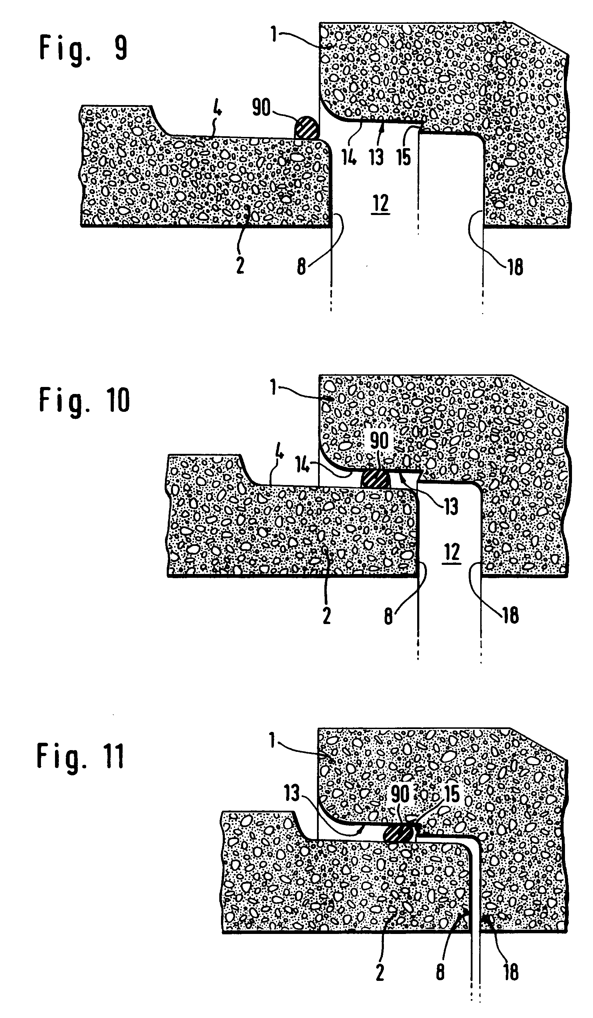

In den Fig. 9 bis 11 ist dargestellt, daß man anstelle einer Gleitdichtung 20 auch einen Rollring 90 verwenden kann, den man auf die Umlauffläche 4 des Spitzendes 2 aufbringt. Beim Einschieben des Spitzendes 2 in die Glockenmuffe 1 rollt der Rollring 90 sowohl auf der Fläche 4 des Spitzendes 2 als auch auf der Fläche 14 des Glockenmuffenendes 1 ab, so daß er schließlich bis zur Mitte der Fläche 4 gelangt, wie in Fig. 11 dargestellt. Wegen der geringen Höhe der Randaussparung 13 wird der Rollring 90 bei diesem Vorgang etwas plattgedrückt. Wegen der Existenz der Schulter 15 kann der Rollring 90 oder Teile davon nicht in den Spalt zwischen den Stirnflächen 8 und 18 gelangen, wie dies bei konventionell gestalteten Glockenmuffenenden vorkommt.

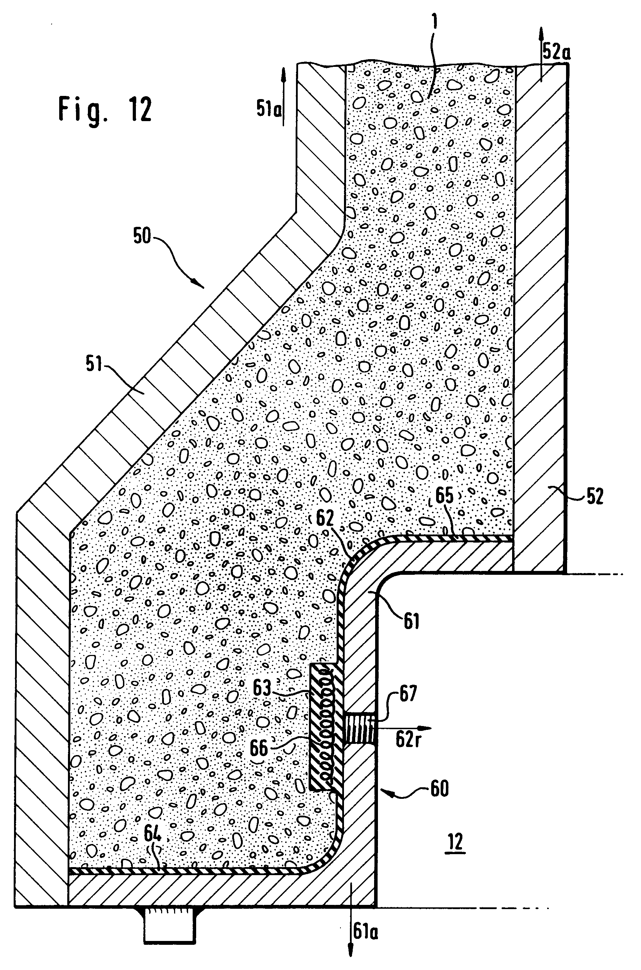

Fig. 12 zeigt die Herstellung eines Betonrohrs anhand einer gefüllten Form 50 im Bereich des Glockenmuffenendes 1. Die Form 50 enthält einen äußeren, rohrförmigen Mantel 51, ein Kernrohr 52 und einen (gegenüber Fig. 5 um 90° gedrehten) Muffenformkern 60 mit den beiden Abschnitten 61 und 62. Fig. 12 beschränkt sich auf die Darstellung einer Ecke, man muß sich die Teile 51 und 52 wesentlich höher und als Rohrteile vorstellen, welche die Innen- und Außenoberfläche des Betonrohres begrenzen. Der Abschnitt 61 dient zur Herstellung des Glockenmuffenraumes 12, während der Abschnitt 62 zur Bildung der Randaussparung 13 bzw. einer ringförmigen Kammeraussparung 53 ausgebildet ist. Bei der Herstellung des Betonrohres bildet der Muffenformkern 60 den Boden der Form 50, so daß der eingefüllte Beton zunächst das Glockenmuffenende 1 entstehen läßt. Das Betonrohr wird demnach auf dem Glockenmuffenende 1 stehend gegossen. Wenn die sogenannte Grünstandsfestigkeit erreicht ist, bei welcher sich der Beton selbst hält, wird das Betonrohr entformt, indem die Teile nacheinander in Richtung der Pfeile 52a, 51a, 61a und 62r auseinandergenommen werden.

Wenn es sich um den Muffenformkern 40 nach Fig. 5 handelt, erfolgt die Demontage der Form 50 für alle Teile in axialer Richtung und für die Abschnitte 41 und 42 gemeinsam, wie dies durch die Pfeile 41a und 42a in Fig. 5 angedeutet ist.

Wenn jedoch die Aussparung 53 im Querschnitt rechteckförmig ist und eine ringförmige Kammer bildet, ist eine Entformung in axialer Richtung nicht möglich, und die Aussparung 53 muß in radialer Richtung entformt werden, wie dies durch den radialen Pfeil 62r in Fig. 12 dargestellt ist. Da sich bekanntlich der Glockenmuffenraum 12 nach innen verengt, kann der Abschnitt 62 nicht aus einem starren Material bestehen. Als Material des Abschnittes 62 wird Gummi bevorzugt. Der Abschnitt 62 weist einen oder mehrere Dichtringaussparungskörper 63 auf, die von dünneren, flügelartigen Teilen 64 und 65 flankiert werden, welche insgesamt die Oberfläche des Abschnittes 61 auskleiden. Im Dichtringaussparungskörper 63 kann eine plattgedrückte Versteifungsfeder 66 mit einvulkanisiert sein. Im Abschnitt 61 ist eine Belüftungsbohrung 67 vorgesehen, durch welche Preßluft oder ein anderes Fluid während des Trennvorgangs zwischen den Teilen 61 und 62 zugeführt wird, um eine schonende Entformung zu garantieren.

Die kritische Entformung der Ringaussparung 53 erfolgt als letzter Schritt, wobei man die Flügel 64, 65 vorsichtig von dem Beton löst, wobei man die elastische Eigenschaft von Gummi ausnutzt, um den Flügel 64 umzustülpen. Danach wird jeder Dichtringaussparungskörper 63 vorsichtig aus dem Beton gezogen.

Zur Erleichterung der Entmantelung kann der Abschnitt 62 aus mehreren Stücken bestehen, die zusammengesetzt auf der Oberfläche des Abschnittes 61 diesen bedecken und auskleiden.

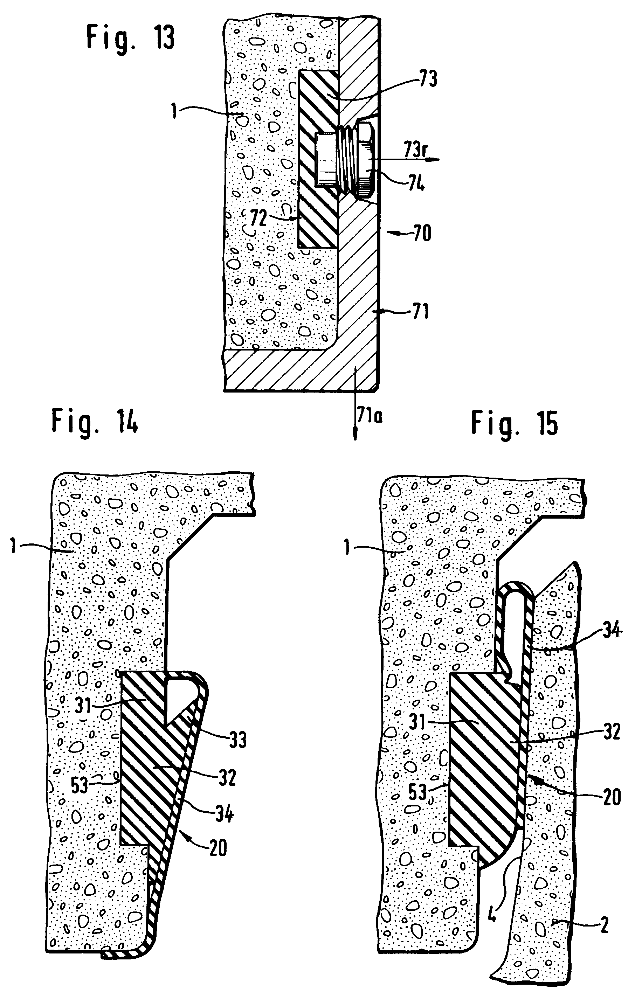

Fig. 13 verdeutlicht eine weitere Ausführungsform 70 des Muffenformkerns, dessen beide Abschnitte mit 71 und 72 bezeichnet sind. Dabei entspricht der Abschnitt 71 in Form und Material dem Abschnitt 61, während der Abschnitt 72 aus einzelnen Ringgliederstücken 73 aus Gummi besteht, die mittels einer Schraube 74 oder einer anderen leicht lösbaren Verbindung an dem Abschnitt 71 gehalten werden, wenn das Betonrohr gegossen wird. Wenn das Betonrohr entformt werden soll, wird in der Weise vorgegangen, wie im Zusammenhang mit Fig. 12 beschrieben. Bevor jedoch der Muffenformkern 70 abgenommen wird, wird die Schraube 74 gelöst, wonach der Abschnitt 71 des Muffenformkerns in axialer Richtung, d. h. in Richtung des Pfeils 71a, abgezogen werden kann. Daraufhin werden die einzelnen Stücke des Dichtringaussparungskörpers 73 in radialer Richtung aus dem Beton gezogen, wie durch Pfeil 73r angedeutet.

Fig. 14 zeigt eine Gleitdichtung in der kammerartigen Ringaussparung 53 mit ihrem Halteteil 31 eingesetzt. Der Abdichtteil 32 enthält eine Lippe 33 und ist durch ein Band 34 abgedeckt, welches dem Schutz des Abdichtteils 32 dient.

Fig. 15 zeigt eine Gleitdichtung 20, die mit ihrem Halteteil 31 in die kammerförmige Aussparung 53 eingesetzt ist und mit ihrem Abdichtteil 32 in den Spalt zwischen Glockenmuffenende 1 und Spitzende 2 hineinragt. Die Dichtung 20 wird von einer Umschlagfolie 34 bedeckt, die zunächst eine Form einnimmt, wie bei 34 in Fig. 14 dargestellt. Bei dem Zusammenstecken von Glockenmuffenende und Spitzende wird die Folie 34 in die Steckmuffenverbindung hineingezogen, wie in Fig. 15 dargestellt, und dient dann als Auskleidung der Oberfläche 4 des Spitzendes 2. Eine derartige Dichtverbindung ermöglicht hin- und hergehende Bewegungen zwischen den Teilen 1 und 2, ohne daß die Dichtung zerrieben wird.

## Patentansprüche

1. Verfahren zur Herstellung von abdichtbaren Betonrohren, die jeweils ein Glockenmuffenende (1) und ein Einsteck- oder Spitzende (2) aufweisen, so daß benachbarte Betonrohre ineinander gesteckt werden können, um eine Steckmuffenverbindung zu bilden, mit folgenden Schritten:
a. es wird eine Form (50) bereitgestellt, die einen Muffenformkern (40, 60, 70) aufweist
a.1. mit einem ersten Abschnitt (41, 61, 71) zur Bildung eines ringförmigen Glockenmuffenraums, in welchem das Einsteck- oder Spitzende (2) Platz findet, und
a.2. mit einem zweiten Abschnitt (42, 62, 72) zur Bildung einer Dichtringaussparung (13, 53), in welcher die Dichtung (20) aufzunehmen und zu montieren ist;
b. das Betonrohr wird in der Form (50), beginnend mit dem Glockenmuffendende (1) gegossen;
c. bei Erreichen der Grünstandsfestigkeit des Betons wird der Muffenformkern (40, 60, 70) aus dem Glockenmuffenende (1) entfernt, so daß die Dichtringaussparung (13, 53) freigelegt wird;
d. in der Zeit nach dem Erhärten des Betons wird vor dem Zusammenstecken benachbarter Betonrohre die jeweilige Dichtung (20) in die Dichtringaussparung (13, 53) des Glockenmuffenraums (12) montiert.

2. Vorrichtung zur Durchführung des Verfahrens nach Anspruch 1, mit einer Form (50) einschließlich eines Muffenformkerns (40; 60; 70),
dadurch gekennzeichnet;
daß der Muffenformkern Abschnitte (41, 42; 61, 62; 71, 72) aufweist, die lösbar miteinander verbunden sind.

3. Vorrichtung nach Anspruch 2,
dadurch gekennzeichnet,
daß der zweite Abschnitt (42; 62; 72) als ringförmiger Aufsatz ausgebildet ist, der auf dem ersten Abschnitt (41; 61; 71) aufgesteckt ist.

4. Vorrichtung nach Anspruch 2 oder 3,
dadurch gekennzeichnet,
daß zwischen den beiden Abschnitten (41, 42) des Muffenformkerns (40) Rastverbindungen (43, 44) und Spaltdichtungen (45) vorgesehen sind.

5. Vorrichtung nach Anspruch 2 oder 3,
dadurch gekennzeichnet,
daß der zweite Abschnitt (62) als Gummiformring ausgebildet ist, der den ersten Abschnitt (61) zur Seite des Betons auskleidet und einen oder mehrere Dichtringaussparkörper (63) aufweist.

6. Vorrichtung nach Anspruch 5,
dadurch gekennzeichnet,
daß der erste Abschnitt (61) im Bereich des Dichtringaussparungskörpers (63) eine Belüftungsbohrung (67) aufweist, durch die Preßluft oder ein anderes Fluid zwischen Gummiformring (62) und erstem Abschnitt (61) des Muffenformkerns (60) eingebracht werden kann, um den Gummiformring vom ersten Abschnitt abzulösen.

7. Betonrohr, erhältlich durch das Verfahren gemäß Anspruch 1, das ein Spitzende (2) und eine Glockenmuffe (1) enthält, die einen ringförmigen Glockenmuffenraum zur Aufnahme eines Spitzendes eines benachbarten Betonrohres sowie eine Aussparung (13) zur Aufnahme einer Dichtung (20) aufweist, wobei die Aussparung (13) an der Frontfläche der Glockenmuffe (1) mit Einlaufabrundung oder - schräge (17) beginnt, sich mit einem zylindrischen Bereich (14) axial nach innen fortsetzt und an einer ringförmigen Hinterschneidungsfläche (15) endet, um eine schwalbenschwanzartige Nut zu bilden.

8. Betonrohr nach Anspruch 7, mit montierter Dichtung (20), die eine im Querschnitt trapezförmigen Halteteil (31) sowie eine Abdichtteil (32) aufweist, dem Preß- und/oder Lippendichtfunktion zukommt, wobei Halteteil und Abdichtteil aus einem Elastomer gummiartiger Konsistenz bestehen, und der Halteteil (31) auf seiner Außenseite (21) mit Widerhaken (29) versehen ist und eine Schrägseite (24) aufweist, um sich in der Dichtringaussparung (13) bzw. an der Hinterschneidungsfläche (15) zu halten.

9. Betonrohr nach Anspruch 7 mit montierter Dichtung, die einen im Querschnitt trapezförmigen Halteteil (31) sowie ein Abdichtteil (32) mit Preß- und/oder Lippendichtfunktion aufweist, wobei Halteteil und Abdichtteil aus einem Elastomer gummiartiger Konsistenz bestehen, und der Halteteil (31) mit einer Nut (25) versehen ist, in die ein Spannring (35) eingelegt werden kann, um die in die Glockenmuffe (1) eingefügte Dichtung (20) nach außen zu spannen.

10. Betonrohr, erhältlich durch das Verfahren gemäß Anspruch 1, das ein Spitzende (2) und eine Glockenmuffe (1) enthält, die einen ringförmigen Glockenmuffenraum zur Aufnahme eines Spitzendes eines benachbarten Betonrohres sowie eine kammerförmige Aussparung (53) mit einer darin aufgenommenen Dichtung (20) aufweist, wobei die Aussparung (53) ringnutförmig mit im wesentlichen rechteckförmigem Querschnitt ausgebildet ist und die Dichtung mit einem Halteteil (31) und einem Abdichtteil (32) versehen ist, dem Preß- und/oder Lippendichtfunktion zukommt, wobei ferner der Halteteil (31) radial außen, zum Einsatz in die kammerförmige Aussparung (53) der Glockenmuffe, einen rechteckförmigen Querschnitt aufweist, und wobei der Abdichtteil (32) an seiner Innenseite eine Abdeckung (34) aufweist, die gegen Schmutz und Beschädigung schützt.

11. Betonrohr nach Anspruch 10,
dadurch gekennzeichnet, daß die Abdeckung (34) verschieblich auf dem Abdichtteil (32) angebracht ist und nach Verlegen der Betonrohre als Auskleidung der Oberfläche (4) des Spitzendes (2) angeordnet ist.

## Claims

1. A method of producing sealable concrete pipes each having a socket end (1) and a spigot or pointed end (2), so that adjacent concrete pipes can be fitted one inside the other to form a spigot and socket joint, comprising the following steps:
a. a mould (50) is made comprising a socket core (40, 60, 70)
a.1. having a first portion (41, 61, 71) to form an annular socket space in which there is room for the spigot or pointed end (2) and
a.2. having a second portion (42, 62, 72) for forming a ring gasket recess (13, 53), for receiving and fitting the gasket (20);
b. the concrete pipe is poured in the mould (50) starting with the socket end (1);
c. when the concrete reaches its green strength the socket core (40, 60, 70) is removed from the socket end (1) so that the ring gasket recess (13, 53) is exposed;
d. the associated gasket (20) is mounted in the ring gasket recess (13, 53) of the socket space (12) in the period after the setting of the concrete and before adjacent concrete pipes are assembled.

2. Apparatus for performing the method according to claim 1, comprising a mould (50) including a socket core (40; 60; 70), characterised in that the socket core has portions (41, 42; 61, 62; 71, 72) which are detachably interconnected.

3. Apparatus according to claim 2, characterised in that the second portion (42; 62; 72) is constructed as an annular attachment which is fitted on the first portion (41; 61; 71).

4. Apparatus according to claim 2 or 3, characterised in that catch connections (43, 44) and gap seals (45) are provided between the two portions (41, 42) of the socket core (40).

5. Apparatus according to claim 2 or 3, characterised in that the second portion (62) is constructed as a moulded rubber ring which lines the first portion (61) on the concrete side and has one or more ring gasket recess elements (63).

6. Apparatus according to claim 5, characterised in that the first portion (61) has an aeration bore (67) in the region of the ring gasket recess element (63), through which bore compressed air or some other fluid can be introduced between the moulded rubber ring (62) and the first portion (61) of the socket core (60) in order to release the moulded rubber ring from the first portion.

7. A concrete pipe obtainable by the method according to claim 1, comprising a spigot end (2) and a socket (1) having an annular socket space to receive a spigot end of an adjacent concrete pipe and a recess (13) to receive a gasket (20), the recess (13) starting at the front surface of the socket (1) with an entry radiusing or bevel (17) continuing axially inwards with a cylindrical zone (14), and terminating at an annular undercut surface (15) to form a dovetail groove.

8. A concrete pipe according to claim 7, with a fitted gasket (20) comprising a retaining part (31) of trapezoidal cross-section and a sealing part (32) having a compressive and/or lip sealing function, the retaining part and the sealing part consisting of an elastomer of rubber-like consistency and the retaining part (31) being provided on the outside (21) with barbs (29) and having an inclined side (24) to hold it in the ring gasket recess (13) and at the undercut surface (15).

9. A concrete pipe according to claim 7, with a fitted gasket (20) comprising a retaining part (31) of trapezoidal cross-section and a sealing part (32) having a compressive and/or lip sealing function, the retaining part and the sealing part consisting of an elastomer of rubber-like consistency, and the retaining part (31) having a groove (25) in which a clamp ring (35) can be inserted in order outwardly to tension the gasket (20) inserted in the socket (1).

10. A concrete pipe obtainable by the method according to claim 1 and comprising a spigot end (2) and a socket (1) having an annular socket space to receive a spigot end of an adjacent concrete pipe and a recess (53) in the form of a chamber with a gasket (20) received therein, the recess (53) being in the form of an annular groove of substantially rectangular cross-section and the gasket being provided with a retaining part (31) and a sealing part (32) having a compressive and/or lip sealing function, the retaining part (31) also having a rectangular cross-section radially externally for insertion in the chamber-like recess (53) of the socket, the sealing part (32) having on its inside a cover (34) providing protection against dirt and damage.

11. A concrete pipe according to claim 10, characterised in that the cover (34) is disposed slidably on the sealing part (32) and after the concrete pipe has been laid acts as a lining for the surface (4) of the spigot end (2).

## Revendications

1. Procédé de fabrication de tubes en béton pouvant être rendus étanches qui présentent respectivement un manchon tulipé (1) et un embout mâle ou cône (2), de façon à pouvoir emboîter des tubes en béton contigus les uns dans les autres pour établir une jonction par emboîtement, comportant les étapes suivantes:
a. on prépare un moule (50), qui présente un noyau (40, 60, 70) pour le manchon
a.1. avec une première partie (41, 61, 71) pour la formation dans le manchon d'un espace annulaire, dans lequel se loge l'embout mâle 2, et
a.2. avec une deuxième partie (42, 62, 72) pour la formation d'un évidement (13, 53) dans lequel le joint (20) doit être reçu et monté;
b. le tube en béton est coulé dans le moule (50), en commençant par le manchon tulipé (1);
c. lorsque le béton a atteint le corps à vert, on retire le noyau (40, 60, 70) du manchon tulipé, libérant ainsi l'évidement (13, 53) pour le joint;
d. pendant la période après le durcissement du béton, et avant d'emboîter des tubes en béton contigus, on place le joint (20) respectif dans l'évidement (13, 53) prévue dans l'espace de manchon (12).

2. Dispositif pour la mise en oeuvre du procédé selon la revendication 1 comportant un moule (50) y compris un noyau (40; 60; 70) pour le moulage du manchon, caractérisé en ce que le noyau présente des parties (41, 42; 61, 62; 71, 72) reliées entre elles et amovibles.

3. Dispositif selon la revendication 2 caractérisé en ce que la deuxième partie (42; 62; 72) est concue comme un chapeau en forme d'anneau placé sur la première partie (41; 61; 71).

4. Dispositif selon la revendication 2 ou 3, caractérisé en ce qu'entre les parties (41, 42) du noyau (40) pour le moulage du manchon des éléments de fixation à crans (43, 44) et des joints à labyrinthe (45) sont prévus.

5. Dispositif selon la revendication 2 ou 3, caractérisé en ce que la deuxième partie (62) est concue en tant qu'anneau de moulage en caoutchouc qui garnit la première partie (61) du côté béton et qui présente un ou plusieurs corps (63) destinés à former l'évidement pour la bague d'étanchéité.

6. Dispositif selon la revendication 5, caractérisé en ce que la première partie (61) présente au niveau du corps (63), destiné à former l'évidement pour la bague d'étanchéité une prise d'air (67) permettant d'amener l'air comprimé ou un autre fluide entre l'anneau de moulage (62) en caoutchouc et la première partie (61) du noyau (60) pour le moulage du manchon, afin de séparer l'anneau de moulage en caoutchouc de la première partie.

7. Tube en béton pouvant être obtenu par le procédé selon la revendication 1, comportant un embout mâle (2) et un manchon tulipé (1), lequel manchon tulipé présente un espace en forme d'anneau destiné à recevoir l'embout mâle d'un tube en béton contigu et un évidement (13) destiné à recevoir un joint (20), l'évidement (13) à la face frontale du manchon tulipé (1) commençant par un arrondi ou biseau d'entrée (17), se poursuivant sur une partie cylindrique (14) en direction axiale vers l'intérieur et se terminant à une surface de contre-dépouille (15) pour former une rainure du type queue d'aronde.

8. Tube en béton selon la revendication 7, comportant un joint (20) monté présentant une partie de retenue (31) de section trapézoïdale ainsi qu'une partie d'étanchement (32) ayant la fonction d'étanchement par compression ou par lèvres, la partie de retenue et la partie d'étanchement étant composées d'un élastomère d'une consistance caoutchouteuse, et la partie de retenue (31) étant pourvue sur sa face extérieure (21) de barbes (29) et présentant un côté oblique (24) lui permettant de se maintenir dans l'évidement 13 destiné à recevoir la bague d'étanchéité ou à la surface de contre-dépouille (15).

9. Tube en béton selon la revendication 7 comportant un joint monté présentant une partie de retenue (31) de section trapézoïdale ainsi qu'une partie d'étanchement (32) ayant la fonction d'étanchement par compression ou par lèvres, la partie de retenue et la partie d'étanchement étant composées d'un élastomère d'une consistance caoutchouteuse, et la partie de retenue (31) étant pourvue d'une rainure (25), dans laquelle on peut placer un anneau de serrage (35) afin de serrer le joint (20) placé dans le manchon tulipé (1) vers l'extérieur.

10. Tube en béton pouvant être obtenu par le procédé selon la revendication 1, comportant un embout mâle (2) et un manchon tulipé (1), lequel manchon présente un espace annulaire destiné à recevoir l'embout mâle d'un tube en béton contigu ainsi qu'un évidement sous forme de chambre (53) dans lequel est placé un joint (20), l'évidement (53) se présentant sous forme de rainure annulaire de section sensiblement rectangulaire et le joint étant pourvu d'une partie de retenue (31) et d'une partie d'étanchement (32) ayant la fonction d'étanchement par compression et/ou par lèvres, la partie de retenue (31) présentant d'autre part, radialement à l'extérieur, une section rectangulaire destinée à rentrer dans l'évidement (53) en forme de chambre du manchon tulipé, et la partie d'étanchement (32) présentant à sa face intérieure un recouvrement (34) constituant une protection contre les saletés et l'endommagement.

11. Tube en béton selon la revendication 10, caractérisé en ce que le recouvrement (34) monté sur la partie d'étanchement (32) peut être déplacé sur celle-ci et qu'après la pose des tubes en béton, il garnit la surface (4) de l'embout mâle (2).
